# EUROPÄISCHE PATENTSCHRIFT

(11) **EP 2 262 662 B1**
(45) Veröffentlichungstag und Bekanntmachung des Hinweises auf die Patenterteilung: **02.10.2013**
(21) Anmeldenummer: 09720854.0
(22) Anmeldetag: 13.03.2009
(51) Int. Cl.: B60R 11/02, B60N 3/00, B60N 3/10, B60R 7/04, B60R 7/08, B60R 7/10, B60R 11/00

(54) **VORRICHTUNG ZUM AUFHÄNGEN VON GEGENSTÄNDEN**
DEVICE FOR SUSPENDING OBJECTS
DISPOSITIF PERMETTANT DE SUSPENDRE DES OBJETS

(30) Priorität: 13.03.2008 CH 374082008; 27.04.2008 WO PCT/EP2008/003409; 12.08.2008 CH 12602008; 04.09.2008 CH 14152008; 22.09.2008 WO PCT/EP2008/007985; 22.09.2008 WO PCT/EP2008/007986; 29.10.2008 CH 17052008; 21.11.2008 CH 18152008; 11.12.2008 CH 19482008; 30.12.2008 CH 20252008; 08.02.2009 CH 179092009; 02.03.2009 CH 308092009
(43) Veröffentlichungstag der Anmeldung: 22.12.2010
(73) Patentinhaber: Kinetix AG, 8750 Glarus (CH)
(72) Erfinder: ACKERET, Peter, CH-8048 Zürich (CH)
(74) Vertreter: Dreiss
(86) Internationale Anmeldenummer: PCT/EP2009/001859
(87) Internationale Veröffentlichungsnummer: WO 2009/112280

(56) Entgegenhaltungen:
- WO-A-91/08928
- DE-A1- 10 261 896
- DE-A1- 19 909 879
- DE-A1-102006 001 778
- DE-A1-102006 024 833
- DE-B3-102005 051 708
- DE-U1- 29 920 466
- GB-A- 2 438 045
- US-A1- 2004 163 223

## Beschreibung

Die Erfindung betrifft eine Vorrichtung zum Aufhängen von Gegenständen an einem Fahrzeugsitzteil, wie eine Rückenlehne, Kopfstütze oder eine Kopfstützenhalterung eines Fahrzeugsitzes.

Oft besteht das Bedürfnis, mitgeführte Gegenstände in Fahrzeugen so zu sichern, dass sie während der Fahrt nicht verrutschen, umkippen oder vom Sitz herunterfallen. Besonders ärgerlich ist dies bei Einkaufstaschen, in denen oft zahlreiche verschiedene stossempfindliche Nahrungsmittel transportiert werden. Aber auch in Handtaschen werden oft viele kleinere Gegenstände mitgeführt, die beim Umkippen im Fahrzeug umherfliegen können und dabei beschädigt werden oder unter den Sitzen verloren gehen. Oft werden auch Notebook-Computer in Taschen im Fahrzeug mitgeführt, die bei brüsken Fahrmanövern im Fahrzeug umher geschleudert werden und dabei Schaden nehmen oder Passagiere verletzen können.

Auf Reisen werden oft auch Kleider auf einzelnen oder mehreren Kleiderbügeln, oft auch in Kleidersäcken verpackt, auf den Beifahrer- oder die Rücksitze gelegt, die wegen des rutschigen Materials schon bei kleinen Beschleunigungen vom Sitz rutschen und auf den Boden fallen, so dass die Kleider schmutzig werden und zerknittern können. Deshalb werden Kleider auf Kleiderbügeln und in Kleidersäcken oft auch an den seitlich über den Türen angeordneten Haltegriffen aufgehängt, wo sie jedoch die Sicht des Fahrers in gefährlicher Weise beeinträchtigen und den Zugang zu den hinteren Sitzen behindern können.

Auf kürzeren Fahrten wird oft auch ein Jackett an einem in den Fahrzeugen üblichen, ebenfalls über der Türe angeordneten und oft mit dem Haltegriff kombinierten Kleiderhalter aufgehängt, was ebenfalls zu Sichtbehinderungen des Fahrers und Behinderungen beim Ein- und Aussteigen führen kann.

Eine gattungsbildende Vorrichtung zum Aufhängen von Gegenständen ist aus der WO 91/08928 A1 bekannt.

Es ist die Aufgabe der Erfindung, eine Vorrichtung zum Aufhängen von Gegenständen zu schaffen, die an Fahrzeugsitzen anbringbar ist und an der Gegenstände wie Einkaufs- und Handtaschen, Jacketts und Kleider lose oder auf Kleiderbügeln und in Kleidersäcken auf einfache und schnelle Weise gegen Verrutschen, Umkippen oder vom Sitz herunterfallen gesichert werden können, ohne dabei die Sicht des Fahrers und das Ein- und Aussteigen in das bzw. aus dem Fahrzeug zu behindern.

Die Vorrichtung soll ferner so gestaltet sein, dass sie bei Nichtgebrauch möglichst wenig Platz einnimmt und kein Verletzungsrisiko für die Insassen des Fahrzeugs darstellt. Zudem soll die Vorrichtung schnell und einfach an Fahrzeugsitzen montiert und demontiert bzw. gegen andere Vorrichtungen ausgetauscht werden können.

Erfindungsgemäss wird diese Aufgabe durch eine Vorrichtung zum Aufhängen von Gegenständen an ein Fahrzeugsitzteil, wie eine Rückenlehne, Kopfstütze oder eine Kopfstützenhalterung eines Fahrzeugsitzes, mit den Merkmalen des unabhängigen Anspruchs 1 gelöst. Vorteilhafte Weiterbildungen der Erfindung sind in den abhängigen Ansprüchen definiert.

Das Zwischenstück kann beweglich mit der Befestigungseinrichtung verbunden sein. Vorzugsweise ist das Zwischenstück über eine Linearführung mit der Befestigungseinrichtung verbunden und mit einer Rastvorrichtung versehen, so dass das Trägerelement in unterschiedlichen Abständen zur Befestigungseinrichtung arretierbar ist.

In einer bevorzugten Ausführungsform ist die Kupplung mit einer manuell lösbaren Verriegelung versehen. Eine solche Kupplung kann beispielsweise als Steckverbindung ausgebildet sein mit einer Aufnahmebuchse an der Befestigungseinrichtung und einem Steckelement am Zwischenstück, mit dem das Trägerelement beweglich verbunden ist. Vorzugsweise ist eine Rastvorrichtung mit mehreren Rastpositionen vorgesehen, so dass das Zwischenstück bzw. das Steckelement in unterschiedlichen Einstecktiefen in der Aufnahmebuchse verriegelbar ist.

Das Anbringen des Trägerelements über eine Kupplung mit zwei Kupplungselementen, die mittels einer manuell lösbaren Verriegelung miteinander verbunden sind, ermöglicht den Einbau einer Befestigungseinrichtung, die mit einem Fahrzeugsitzteil verbunden ist und an der einfach und schnell verschiedene Vorrichtungen montiert, demontiert und untereinander ausgetauscht werden können, ohne dass dazu die Befestigungseinrichtung vom Fahrzeugsitzteil entfernt werden muss.

Vorzugsweise ist die Befestigungseinrichtung so ausgebildet, dass die Vorrichtung von vorne oder von hinten am Fahrzeugsitzteil montiert werden kann. Dazu eignet sich insbesondere eine Befestigung im Raum zwischen der Oberseite der Rückenlehne und der Unterseite der Kopfstütze. Die Befestigungseinrichtungkann dabei an der Oberseite der Rückenlehne oder an der Unterseite der Kopfstütze oder an der Kopfstützenhalterung, insbesondere den Kopfstützenstangen, angeordnet sein. Auf der gegen die Sitzbank gerichteten Vorderseite der Rückenlehne lassen sich so beispielsweise an freien Beifahrer- oder Rücksitzen Taschen oder Kleiderbügel, bzw. Kleidersäcke befestigen.

Die Befestigungseinrichtung umfasst vorzugsweise eine beidseitig offene Aufnahmebuchse mit einer Verriegelungsvorrichtung, in welche das Steckelement von beiden Seiten eingesteckt und in verschiedenen Einsteckpositionen arretiert werden kann. Die Aufnahmebuchse ist vorzugsweise mit Befestigungselementen an den Kopfstützenstangen befestigt.

Die Aufnahmebuchse für das Steckelement kann auch an der Rückenlehne, vorzugsweise auf deren Oberseite, oder an der Kopfstütze, vorzugsweise an deren Unterseite, angeordnet oder in diese Fahrzeugsitzteile integriert und vorzugsweise ausklappbar sein.

Das Trägerelement kann mit dem Zwischenstück bzw. dem Steckelement über ein Gelenk verbunden sein, wobei die Drehachse des Gelenks horizontal oder vertikal verlaufen kann. Alternativ kann das Trägerelement mittels einer Linearführung an dem Zwischenstück bzw. an dem Steckelement geführt sein. Bei Verwendung einer Linearführung wird vorzugsweise eine Rastvorrichtung vorgesehen, welche das Trägerelement in unterschiedlichen Auszugsstellungen arretiert. Die Rastvorrichtung kann ein Verriegelungselement umfassen, das mittels Betätigungsorgan lösbar ist. Zudem sind Endanschläge vorgesehen, welche die Gebrauchs- bzw. Nichtgebrauchsstellung des Trägerelements definieren.

Das Trägerelement ist vorzugsweise hakenförmig ausgebildet und mit einer festen oder beweglichen Sicherung versehen, mit welcher die am Trägerelement aufgehängten Gegenstände (bspw. Taschen) oder Kleiderbügel gegen Aushängen gesichert werden können. Die Sicherung kann bspw. einen klapp- oder verschiebbaren Sicherungsbügel umfassen, der nach dem Aufhängen von Gegenständen oder Kleiderbügeln über diese geklappt, bzw. geschoben und ggf. arretiert werden kann.

In einer bevorzugten Ausführungsform hat das Trägerelement eine Bodenwand, die linearverschiebbar im Zwischenstück bzw. Steckelement geführt ist, mit einer am freien Ende angeordneten, im Wesentlichen vertikal verlaufenden Abschlusswand und einem am oberen Ende der Abschlusswand angeordneten, gegen die Befestigungseinrichtung gerichteten, parallel zur Bodenwand verlaufenden Niederhalter. Der Niederhalter ist kürzer als die Bodenwand, so dass bei voll ausgezogenem Trägerelement Gegenstände oder Kleiderbügel von oben eingehängt und unter den Niederhalter geschoben werden können. Das Trägerelement kann dann soweit in das Zwischenstück, bzw. Steckelement zurückgeschoben und verriegelt werden, dass der Zwischenraum zum Einführen oder Entnehmen der Gegenstände oder Kleiderbügel verschlossen ist.

Die Bodenwand des Trägerelements ist vorzugsweise um eine parallel zu seiner Bewegungsrichtung verlaufende Achse konvex nach oben gewölbt. Diese dient zur besseren Auflage und breiteren Abstützung von Taschengriffen aus flexiblen Materialien und von meist runden Haken von Kleiderbügeln. Zudem wird so die Stabilität des Trägerelements erhöht.

Die Länge des Trägerelements kann in etwa der Länge des Zwischenstücks, bzw. Steckelements entsprechen, so dass sich ein möglichst langer Auszugsweg ergibt. Ist eine Rastvorrichtung mit variabler Verriegelungsposition des Steckelements in der Aufnahmebuchse vorgesehen, kann der Auszugsweg zusätzlich verlängert werden. Aufnahmebuchse, Steckelement und Trägerelement bilden so vorteilhaft zusammen einen linearen Doppelauszug.

In der Nichtgebrauchsstellung kann das Trägerelement vollständig in das Steckelement und das Steckelement vollständig in die Aufnahmebuchse eingeschoben werden, so dass die Abschlusswand an der den Kopfstützenstangen abgekehrten äusseren Stirnwand der Befestigungsvorrichtung anliegt.

An der Befestigungseinrichtung kann eine der Kontur der Abschlusswand entsprechende Mulde ausgebildet sein, so dass das Trägerelement in der Nichtgebrauchsstellung vollständig in der Befestigungseinrichtung aufgenommen ist und die Abschlusswand mit der Aussenkontur der Befestigungseinrichtung fluchtet.

Das Schutzgehäuse, in dem das Trägerelement in seiner Nichtgebrauchsstellung ganz oder teilweise aufgenommen wird und/oder an dem das Trägerelement in seiner Nichtgebrauchsstellung ganz oder teilweise anliegt, ist am Zwischenstück bzw. Steckelement angeordnet oder ausgebildet. Dazu sind entsprechende Aufnahmeräume, Vertiefungen oder Mulden vorgesehen, welche ein Schutzgehäuse bilden, um die Fahrzeuginsassen vor Verletzungen zu schützen.

In einer bevorzugten Bauweise kann die Vorrichtung einen zusätzlichen Kleiderhalter, insbesondere zum Aufhängen eines Jacketts, umfassen. Der Kleiderhalter ist vorzugsweise so an der Vorrichtung angeordnet, dass das Trägerelement und der Kleiderhalter unabhängig voneinander einzeln oder gleichzeitig benützbar sind, so dass bspw. ein Kleidersack mit Kleiderbügeln oder eine Tasche am Trägerelement und gleichzeitig ein Sakko am Kleiderhalter aufgehängt oder von diesem abgenommen werden kann.

Vorzugsweise ist auch der Kleiderhalter beweglich mit der Vorrichtung verbunden und zwischen einer Nichtgebrauchsstellung, in der er mindestens teilweise in einem Schutzgehäuse aufgenommen wird und/oder an diesem anliegt und einer Gebrauchsstellung, in der er zum Aufhängen von Kleidungsstücken zugänglich ist, bewegbar.

In einer bevorzugten Bauweise ist der Kleiderhalter am Trägerelement angeordnet und über ein Gelenk oder eine Linearführung mit diesem verbunden. Vorzugsweise bildet dann das Trägerelement das Schutzgehäuse für den Kleiderhalter in seiner Nichtgebrauchsstellung.

Der Kleiderhalter kann als L-förmiger Haken ausgebildet sein mit einem ersten Schenkel, welcher an oder in der Bodenwand des Trägerelements geführt ist und einem am freien Ende des ersten Schenkels angeordneten zweiten Schenkel, der die Frontwand des Kleiderhalters bildet und der in der Nichtgebrauchsstellung des Kleiderhalters in einer entsprechenden Ausnehmung in der Abschlusswand und/oder im Niederhalter des Trägerelements aufgenommen ist.

Alternativ kann der erste Schenkel des Kleiderhalters über ein Gelenk mit der Bodenwand oder der Abschlusswand des Trägerelements verbunden und in einer entsprechend ausgebildeten Ausnehmung in der Abschlusswand und/oder im Niederhalter des Trägerelements aufgenommen sein.

Der Kleiderhalter kann mit einer Feder versehen sein, welche ihn in die Gebrauchs- oder die Nichtgebrauchsstellung vorspannt. Bei Verwendung einer Feder, die den Kleiderhalter in die Gebrauchsstellung vorspannt, kann der Kleiderhalter mit einem handelsüblichen Push-Push Fingertip-Verschluss in der Nichtgebrauchsstellung im Trägerelement verriegelt werden.

Vorzugsweise liegt das freie Ende des Trägerelements in der Nichtgebrauchsstellung im Wesentlichen innerhalb der Aussenkonturen der Unterseite der Kopfstütze und der Oberseite der Rückenlehne des Fahrzeugsitzes, während es in der Gebrauchsstellung soweit über diese Aussenkonturen hinausragt, dass Gegenstände oder Kleidungsstücke aufgehängt werden können.

Weitere Vorteile und Ausgestaltungen der Erfindung ergeben sich aus der Beschreibung und den beiliegenden Zeichnungen.

Die Erfindung wird nachstehend anhand von bevorzugten Ausführungsbeispielen unter Bezugnahme auf die anliegenden Zeichnungen beschrieben.
- Fig. 1: zeigt eine Perspektivansicht eines als Steckelement ausgebildeten Zwischenstücks mit ausziehbarem Trägerelement und einem daran angeordneten ausziehbaren Kleiderhalter in der Nichtgebrauchsstellung.
- Fig. 2: zeigt eine Perspektivansicht eines als Steckelement ausgebildeten Zwischenstücks gemäss Fig. 1 mit dem Trägerelement in der Nichtgebrauchsstellung und dem Kleiderhalter in der Gebrauchsstellung.
- Fig. 3: zeigt eine Perspektivansicht eines als Steckelement ausgebildeten Zwischenstücks gemäss Fig. 1 mit dem Trägerelement in der Gebrauchsstellung und dem Kleiderhalter in der Nichtgebrauchsstellung.
- Fig. 4: zeigt eine Perspektivansicht eines als Steckelement ausgebildeten Zwischenstücks gemäss Fig. 1 mit dem Trägerelement und dem Kleiderhalter in der Gebrauchsstellung.
- Fig. 5: zeigt einen Querschnitt durch die Vorrichtung mit dem Trägerelement und dem Kleiderhalter in der Nichtgebrauchsstellung.
- Fig. 6: zeigt einen Querschnitt durch die Vorrichtung mit dem Trägerelement in der Nichtgebrauchsstellung und dem Kleiderhalter in der Gebrauchsstellung.
- Fig. 7: zeigt einen Querschnitt durch die Vorrichtung mit dem Trägerelement in der Gebrauchsstellung und dem Kleiderhalter in der Nichtgebrauchsstellung.
- Fig. 8: zeigt einen Querschnitt durch die Vorrichtung mit dem Trägerelement und dem Kleiderhalter in der Gebrauchsstellung.
- Fig. 9: zeigt eine perspektivische Innenansicht eines als Steckelement ausgebildeten Zwischenstücks mit dem Trägerelement in der Gebrauchsstellung und dem Taschenhalter in der Nichtgebrauchsstellung.
- Fig. 10: zeigt eine Perspektivansicht einer an einer Kopfstützenhalterung montierten Befestigungseinrichtung und nicht montiertem Steckelement mit dem Trägerelement und dem Kleiderhalter in der Nichtgebrauchsstellung.
- Fig. 11: zeigt eine Perspektivansicht der Vorrichtung gemäss Fig. 10 mit montiertem Steckelement.
- Fig. 12: zeigt einen Querschnitt durch eine Variante der Vorrichtung mit ausklappbarem Kleiderhalter in der Gebrauchs- und der Nichtgebrauchsstellung.
- Fig. 13: zeigt eine Perspektivansicht des Steckelements gemäss Fig. 12 mit dem Trägerelement in der Nichtgebrauchsstellung und dem Kleiderhalter in der Gebrauchsstellung.
- Fig. 14: zeigt eine Perspektivansicht einer an einer Kopfstützenhalterung montierten Vorrichtung mit dem Trägerelement in der Nichtgebrauchsstellung und dem Kleiderhalter in der Gebrauchsstellung.
- Fig. 15: zeigt eine Perspektivansicht einer an einer Kopfstützenhalterung montierten Vorrichtung gemäss Fig. 14 mit dem Trägerelement und dem Kleiderhalter in der Gebrauchsstellung.
- Fig. 16: zeigt eine Perspektivansicht einer an einer Kopfstützenhalterung montierten Vorrichtung mit auf der Vorderseite der Rückenlehne montiertem Trägerelement in der Nichtgebrauchsstellung und dem Kleiderhalter in der Gebrauchsstellung.
- Fig. 17: zeigt eine Perspektivansicht der Vorrichtung gemäss Fig. 16 mit dem Trägerelement in der Gebrauchsstellung und dem Kleiderhalter in der Nichtgebrauchsstellung.
- Fig. 18: zeigt eine Perspektivansicht der Vorrichtung gemäss Fig. 17.
- Fig. 19: zeigt eine Perspektivansicht einer ersten Variante der Befestigungseinrichtung mit einem Ausschnitt der Kopfstützenstangen und zwei Steckelementen in nicht montiertem Zustand.
- Fig. 20: zeigt einen Ausschnitt aus der Befestigungseinrichtung gemäss Fig. 19 in montiertem Zustand mit eingeschobenem und verriegeltem Steckelement in einem Längsschnitt.
- Fig. 21: zeigt eine zweite Variante der Befestigungseinrichtung mit den Kopfstützenstangen in montiertem und nicht montiertem Zustand mit eingeschobenem und verriegeltem Steckelement in einem Längsschnitt.
- Fig. 22: zeigt eine Perspektivansicht einer an einer Kopfstützenhalterung montierten Variante der erfindungsgemässen Vorrichtung in der Gebrauchsstellung.
- Fig. 23: zeigt die Vorrichtung gemäss Fig. 22 in der Nichtgebrauchsstellung.
- Fig. 24: zeigt eine Perspektivansicht des Steckelements gemäss Fig. 22 und 23 mit dem Trägerelement in der Gebrauchsstellung.
- Fig. 25: zeigt eine Perspektivansicht des Steckelements gemäss Fig. 24 mit dem Trägerelement in der Nichtgebrauchsstellung.

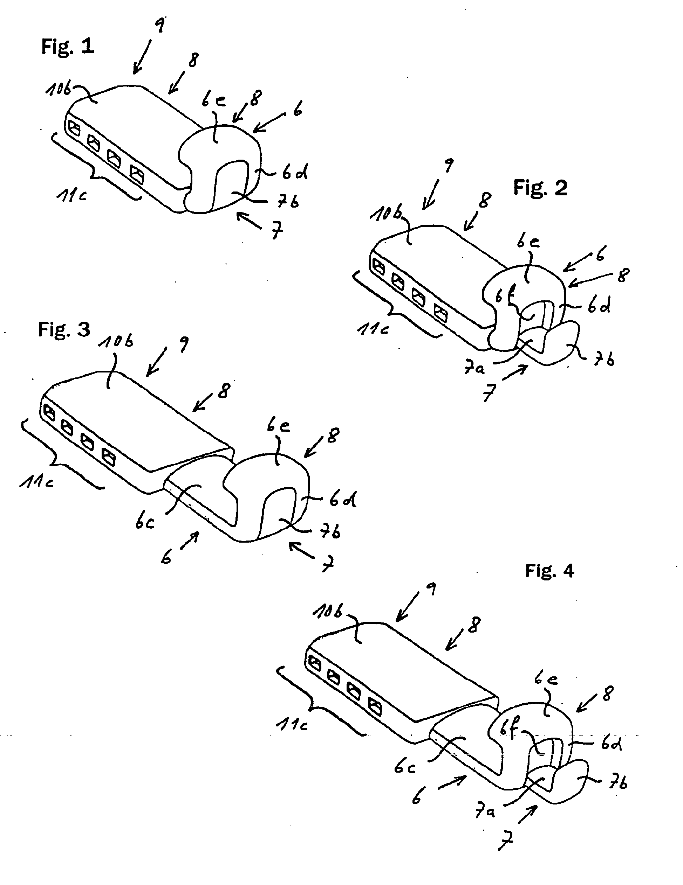

Fig. 1 bis 4 zeigen ein als Steckelement 10b ausgebildetes Zwischenstück 9 mit einem darin linear geführten Trägerelement 6 und einem im Trägerelement 6 linear geführten Kleiderhalter 7 in verschiedenen Stellungen. Fig. 1 zeigt das Trägerelement 6 und den Kleiderhalter 7 in der Nichtgebrauchsstellung. Fig. 2 zeigt das Trägerelement 6 in der Nichtgebrauchsstellung und den Kleiderhalter 7 in der Gebrauchsstellung. Fig. 3 zeigt das Trägerelement 6 in der Gebrauchsstellung und den Kleiderhalter 7 in der Nichtgebrauchsstellung. Fig. 4 zeigt das Trägerelement 6 und den Kleiderhaken 7 in der Gebrauchsstellung.

Die Bodenwand 6c des Trägerelements 6 weist eine um eine parallel zur Bewegungsrichtung des Trägerelements 6 verlaufende Achse konvex nach oben gewölbte Innenseite auf. Am freien Ende der Bodenwand 6c ist eine in etwa senkrecht zur Bodenwand 6c ausgerichtete Abschlusswand 6d angeordnet, die an ihrem oberen Ende mit einem gegen das Steckelement 10b gerichteten, im Wesentlichen parallel zur Bodenwand 6c verlaufenden Niederhalter 6e versehen ist, der die aufgehängten Gegenstände, insbesondere Kleiderbügel 12b, sichern soll.

Auf der Aussenseite der Abschlusswand 6d ist eine Ausnehmung 6f angeordnet, die als Schutzgehäuse 8 für den Kleiderhalter 7 dient, wenn dieser in das Trägerelement 6 eingeschoben ist und sich in der Nichtgebrauchsstellung befindet.

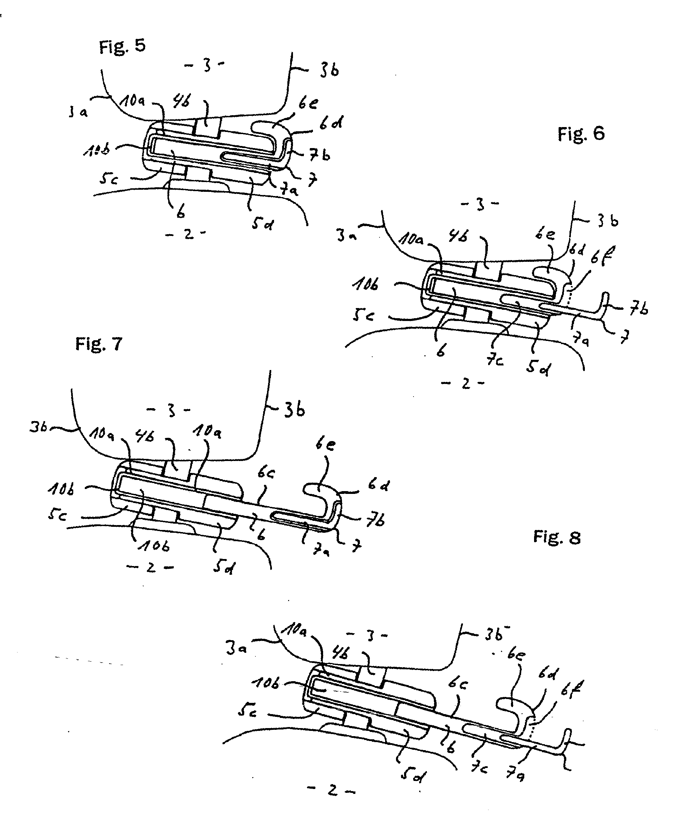

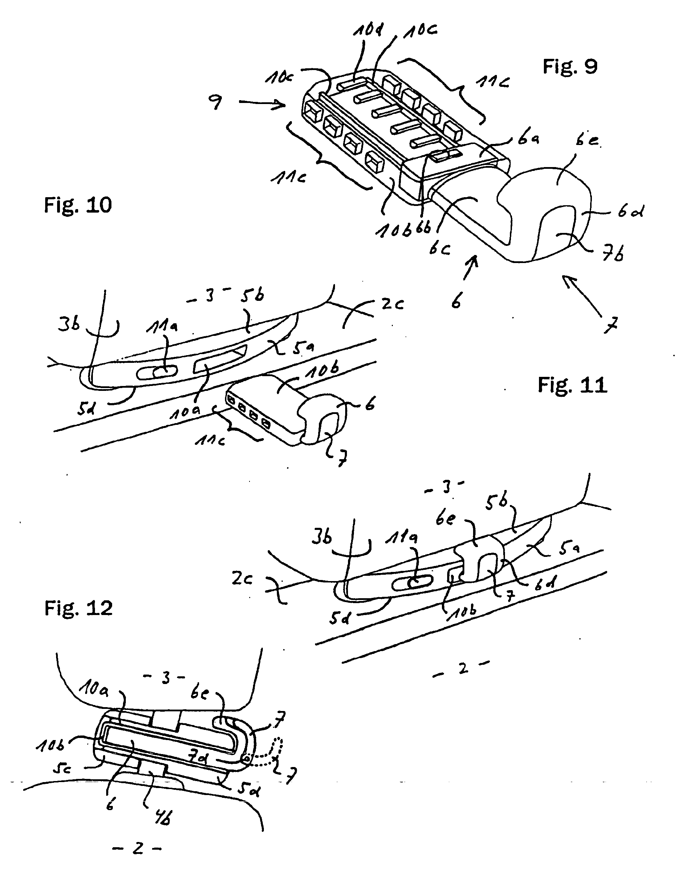

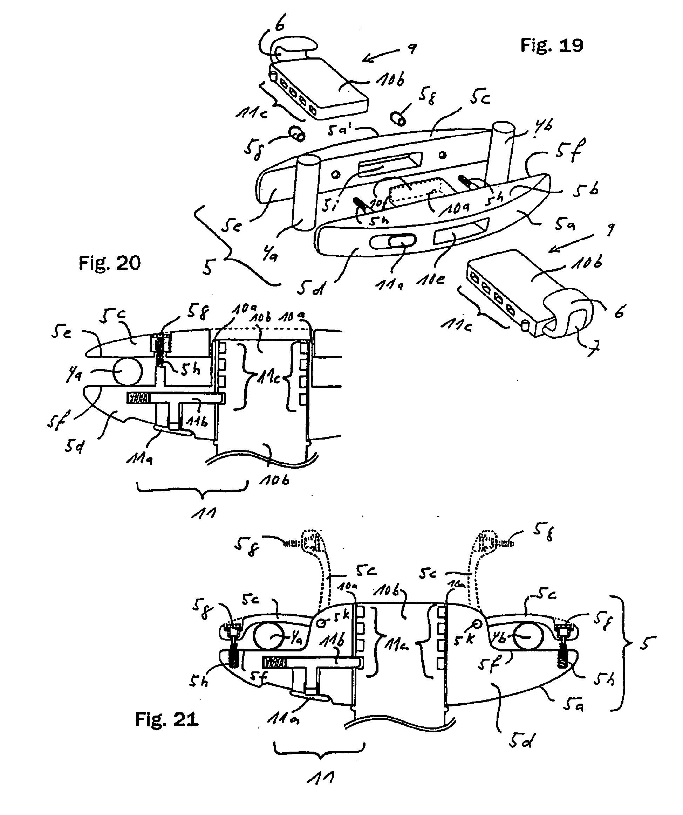

Fig. 5 bis 8 zeigen eine mittels der Befestigungseinrichtung 5c, 5d an die Kopfstützenstangen 4a, 4b einer Kopfstützenhalterung 4 angebrachte Vorrichtung (Fig. 10 und 19). In der an der Befestigungseinrichtung 5 angeordneten Aufnahmebuchse 10a ist das Steckelement 10b eingesteckt und verriegelt (Fig. 20). Im Steckelement 10b ist das Trägerelement 6 linear verschiebbar gelagert. Am freien Ende der Bodenwand 6c des Trägerelements 6 ist die Abschlusswand 6d angeordnet an deren oberen Ende der gegen die Kopfstützenstangen 4a, 4b gerichteter Niederhalter 6e angebracht ist.

In der Nichtgebrauchsstellung (Fig. 5) ist das Trägerelement 6 im Steckelement 10b eingeschoben und die Abschlusswand 6d sowie der Niederhalter 6e liegen an der Stirnwand 5a bzw. an der Deckwandung 5b des Befestigungsmittels 5d an (Fig. 11). Am Niederhalter 6e kann das Trägerelement 6 aus dem Steckelement 10b in die Gebrauchsstellung herausgezogen werden.

Der erste Schenkel 7a des Kleiderhalters 7 ist mittels einer Linearführung 7c in der Bodenwand 6c des Trägerelements 6 gelagert und kann zwischen einer Nichtgebrauchsstellung (Fig. 5 und 7), in welcher der Kleiderhalter 7 im Trägerelement 6 eingeschoben ist, und einer Gebrauchsstellung (Fig. 6 und 8), in welcher Kleidungsstücke 12a am Kleiderhalter aufgehängt werden können, bewegt werden. An der Abschlusswand 6d des Trägerelements 6 ist eine Ausnehmung 6f vorgesehen, in der der zweite Schenkel 7b in der Nichtgebrauchsstellung des Trägerelements 6 aufgenommen wird. Der Kleiderhalter 7 ist mit einem handelsüblichen Push-Push Fingertip-Verschluss (nicht dargestellt) im Trägerelement 6 verriegelt und wird beim Antippen durch eine Feder (nicht dargestellt) in die Gebrauchsstellung bewegt.

Fig. 9 zeigt das Steckelement 10b mit dem Trägerelement 6 in ausgefahrener Gebrauchsstellung und dem Kleiderhalter 7 in der eingefahrenen Nichtgebrauchsstellung. Im Steckelement 10b sind Führungen 10c für das Trägerelement 6 angeordnet. Mittels Anschlägen 6a wird der Auszugsweg des Trägerelements 6 begrenzt und mittels Rastnocken 6b am Trägerelement 6 und Gegennocken 10d am Steckelement 10b kann das Trägerelement 6 in verschiedenen Auszugspositionen im Steckelement 10b fixiert werden. Mittels Rastvorrichtungen 11c auf beiden Längsseiten des Steckelements 10b kann dieses in unterschiedlichen Einsteckpositionen in der Aufnahmebuchse 10a arretiert werden (Fig. 20).

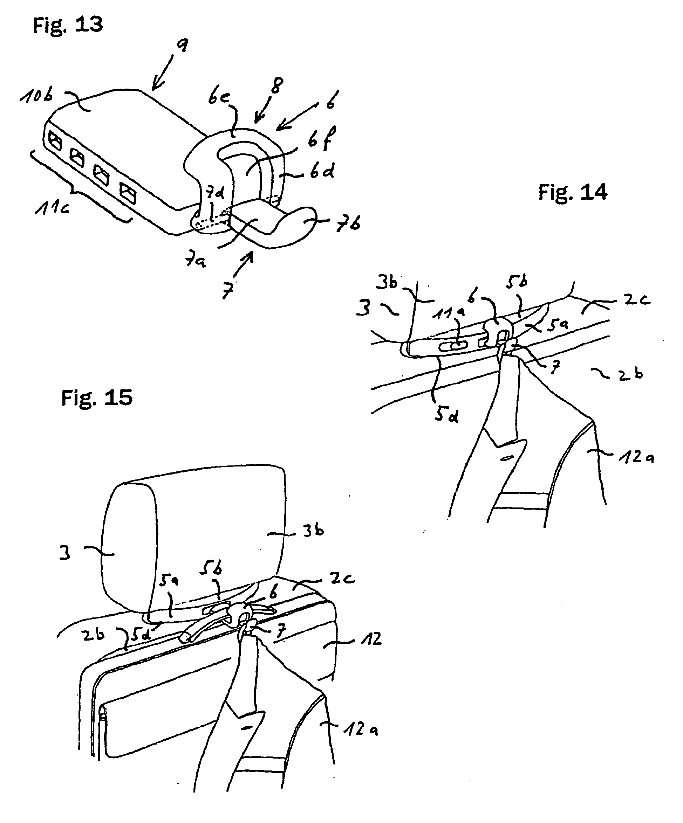

Fig. 12 und 13 zeigen eine alternative Variante für den Taschenhalter 7. Statt mit einer Linearführung 7c ist der Taschenhalter 7 über ein Drehgelenk 7d mit dem Trägerelement 6 verbunden. In der Abschlusswand 6d sowie im Niederhalter 6e ist eine entsprechende Ausnehmung 6f vorgesehen, die den Kleiderhalter 7 in der Nichtgebrauchsposition aufnimmt.

In Fig. 14 bis 18 werden verschiedene Anwendungen der Vorrichtung an einer Rückenlehne 2 eines Fahrzeugsitzes 1 in verschiedenen Gebrauchsstellungen gezeigt. Fig. 14 zeigt eine Anwendung mit einem auf der Hinterseite 2b einer Rückenlehne 2 am Kleiderhalter 7 aufgehängten Kleidungsstück 12a und Fig. 15 zeigt eine Anwendung mit einem am Trägerelement 6 aufgehängten Gegenstand 12 und einem am Kleiderhalter 7 aufgehängten Kleidungsstück 12a.

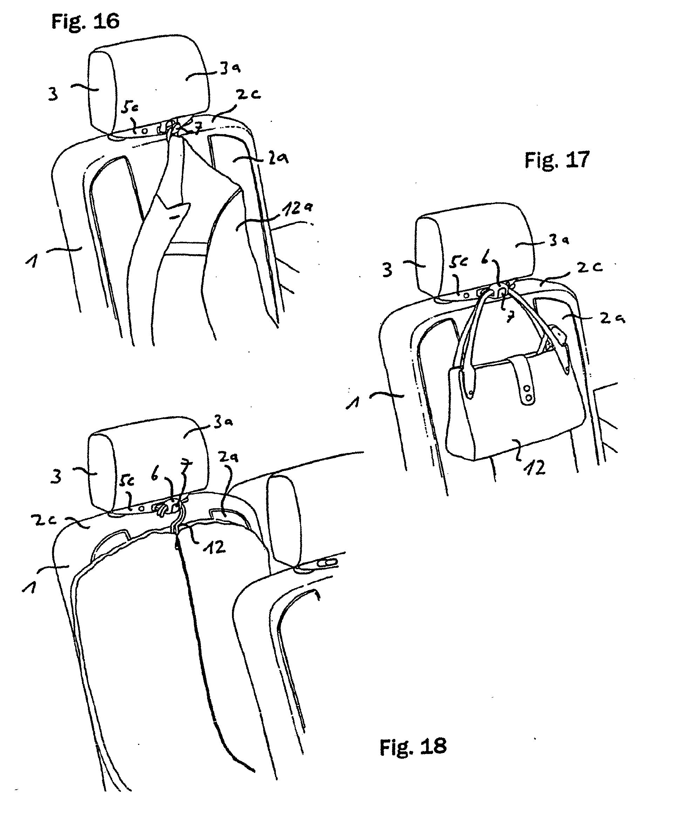

In Fig. 16 bis 18 werden verschiedene Anwendungen der Vorrichtung auf der Vorderseite 2a einer Rückenlehne 2 eines Fahrzeugsitzes gezeigt. Fig. 16 zeigt ein am Kleiderhaken 7 aufgehängtes Kleidungsstück 12a. Fig. 17 zeigt einen am Trägerelement 6 aufgehängten Gegenstand 12 und Fig. 18 zeigt am Trägerelement 6 an Kleiderbügeln 12b aufgehängte Kleidungsstücke 12a in einem Kleidersack. In Fig. 17 und 18 ist der Kleiderhalter 7 in der Nichtgebrauchsstellung.

Fig. 19 zeigt eine perspektivische Explosionsdarstellung einer ersten Variante der Befestigungseinrichtung 5, mit der sich die Vorrichtung mittels eines Steckelements 10b an der Vorderseite 2a oder an der Hinterseite 2b einer Rückenlehne 2 an den Kopfstützenstangen 4a, 4b eines Fahrzeugsitzes 1 befestigen lässt.

An einem ersten Befestigungselement 5d ist eine Aufnahmebuchse 10a angeordnet, mit einer ersten Öffnung 10e und einer zweiten Öffnung 10f zum beidseitigen Einführen des Steckelements 10b. Die erste Öffnung 10e fluchtet mit der konvex gekrümmten Aussenwand 5a des ersten Befestigungselements 5d.

Das erste Befestigungselement 5d und das zweite Befestigungselement 5c weisen im Wesentlichen kongruente Konturen auf und überragen die Kopfstützenstangen 4a, 4b auf beiden Seiten. Die gegen die Kopfstützenstangen 4a, 4b gerichteten Innenwände 5f, 5e des ersten Befestigungselements 5d und des zweiten Befestigungselements 5c verlaufen im Wesentlichen gerade und parallel zueinander. Die voneinander fort weisenden Aussenwände 5a, 5a' sind konvex gekrümmt mit einem maximalen Abstand voneinander in der Mitte der Aufnahmebuchse 10a und einem minimalen Abstand voneinander an ihren äusseren Enden.

Zwischen der Aufnahmebuchse 10a und den Kopfstützenstangen 4a, 4b sind beidseitig Verbindungsmittel 5h, 5g in Form von Schraubverbindungen angeordnet, mit denen das erste Befestigungselement 5d und das zweite Befestigungselement 5c gegen die Kopfstützenstangen 4a, 4b gespannt werden.

Im zweiten Befestigungselement 5c ist eine Abstützung 5i in Form einer kastenförmigen Ausnehmung vorgesehen, in der die Aufnahmebuchse 10a mit ihren Seiten-, Boden- und Deckwänden vorzugsweise formschlüssig aufgenommen ist. Die Tiefe der Ausnehmung ist so bemessen, dass die Aufnahmebuchse 10a sich in Einsteckrichtung des Steckelements 10b frei in der Ausnehmung bewegen kann, so dass die Befestigungseinrichtung 5 an Kopfstützenstangen 4a, 4b unterschiedlicher Durchmesser angebracht werden kann.

An der Stirnwand 5a des ersten Befestigungselements 5d ist seitlich der ersten Öffnung 10e ein Betätigungsorgan 11 a in Form eines Schiebeschalters angeordnet, mittels dem die Falle 11b mit der das Steckelement 10b in der Aufnahmebuchse 10a verriegelt wird, gelöst werden kann. An beiden Seitenwänden des Steckelements 10b sind Rastvorrichtungen 11c angeordnet, mit mehreren in Einsteckrichtung hintereinander angeordneten Ausnehmungen, in welche die Falle 11 b einrasten kann, so dass das Steckelement 10b in beiden Einsteckrichtungen in unterschiedlichen Positionen in der Aufnahmebuchse 10a arretierbar ist (Fig. 20).

Fig. 21 zeigt eine zweite Variante der Befestigungseinrichtung 5, mit der sich die Vorrichtung mittels Steckelement 10b an den Kopfstützenstangen 4a, 4b eines Fahrzeugsitzes 1 befestigen lässt. Das erste Befestigungselement 5d bildet einen T-förmigen Block, in dem die Aufnahmebuchse 10a sowie die Verriegelung 11 untergebracht sind und der zwischen den Kopfstützenstangen 4a, 4b hindurch ragt.

Das Anbringen des Befestigungselements 5d an den Kopfstützenstangen 4a, 4b erfolgt mittels den beiden seitlich der Aufnahmebuchse 10a am ersten Befestigungselement 5d angeordneten, um Lager 5k schwenkbaren zweiten Befestigungselementen 5c, die mittels Schraubverbindungen 5g, 5h am ersten Befestigungselement 5d gegen die Kopfstützenstangen 4a, 4b gespannt werden können.

Zum einfachen Montieren der Befestigungseinrichtung können die zweiten Befestigungselemente 5c soweit nach vorne geschwenkt werden, dass das erste Befestigungselement 5d zwischen den Kopfstützenstangen 4a, 4b hindurch geschoben werden kann, bis die Innenwände 5f an den Kopfstützenstangen 4a, 4b anliegen. Anschliessend werden die zweiten Befestigungselemente 5c an die Kopfstützenstangen 4a, 4b angelegt und mit dem ersten Befestigungselement 5d verschraubt.

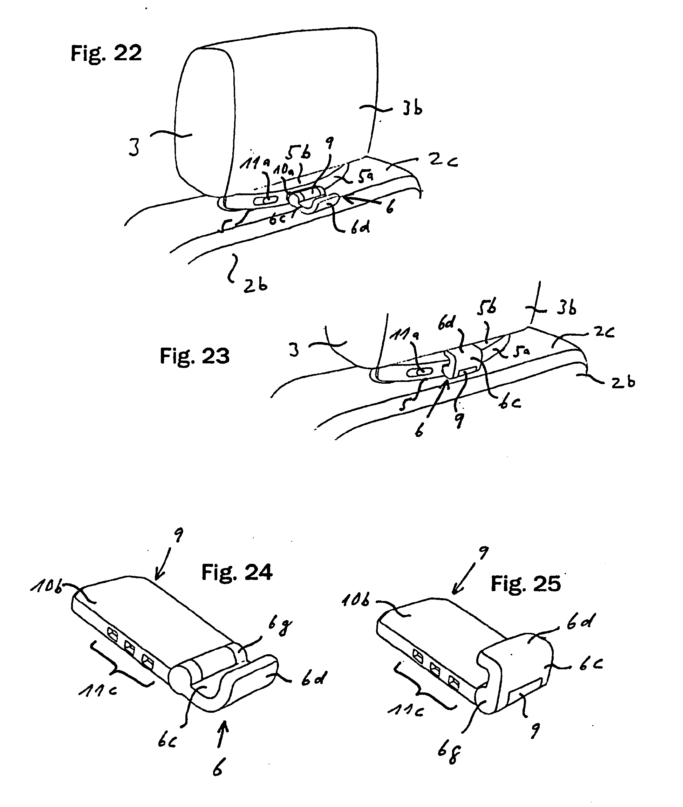

In Fig. 22 bis 25 wird eine Variante der erfindungsgemässen Vorrichtung dargestellt, bei welcher das Trägerelement 6 über ein Gelenk 6g mit dem Steckelement 10b verbunden ist. In der Nichtgebrauchsstellung (Fig. 23) ist das Steckelement 10b vollständig in der Aufnahmebuchse 10a bzw. in der Befestigungseinrichtung 5 aufgenommen und das Trägerelement 6 um ca. 90° nach oben geklappt, so dass die Bodenwand 6c des Trägerelements 6 an der Aussenkontur der Stirnwand 5a und die Abschlusswand 6d des Trägerelements 6 an der Aussenkontur der Deckwandung 5b der Befestigungseinrichtung 5 anliegt. Das Trägerelement 6 wird durch eine (nicht dargestellte) Feder in die Nichtgebrauchsstellung, die durch einen Anschlag am Steckelement 10b definiert wird, bewegt. Bei Gebrauch wird das Trägerelement 6 gegen die Kraft der Feder in die durch einen zweiten Anschlag am Steckelement 10b definierte Gebrauchsstellung bewegt und beim Aufhängen von Gegenständen 12 in dieser Stellung gehalten.

## Patentansprüche

1. Vorrichtung zum Aufhängen von Gegenständen an ein Fahrzeugsitzteil, wie eine Rückenlehne (2), Kopfstütze (3) oder eine Kopfstützenhalterung (4a, 4b) eines Fahrzeugsitzes (1), umfassend
eine Befestigungseinrichtung (5), die dem Fahrzeugsitzteil (2, 3, 4a, 4b) zugeordnet ist,
ein mit der Befestigungseinrichtung (5) über eine lösbare Kupplung (10a, 10b) verbundenes Zwischenstück (9), sowie
ein mit dem Zwischenstück (9) verbundenes Trägerelement (6),
**dadurch gekennzeichnet,**
**dass** das Zwischenstück (9) ein Schutzgehäuse (8) aufweist und
**dass** das Trägerelement (6) beweglich mit dem Zwischenstück (9) verbunden ist und das Trägerelement (6) zwischen einer Nichtgebrauchsstellung, in der es mindestens teilweise in dem Schutzgehäuse (8) aufgenommen ist und/oder an diesem anliegt, und einer Gebrauchsstellung, in der es zum Aufhängen der Gegenstände (12, 12a) zugänglich ist, bewegbar ist.

2. Vorrichtung nach Anspruch 1, wobei das Trägerelement (6) linear beweglich mit dem Zwischenstück (9) verbunden ist.

3. Vorrichtung nach Anspruch 1, wobei das Trägerelement (6) über ein Gelenk (6g) drehbar mit dem Zwischenstück (9) verbunden ist.

4. Vorrichtung nach einem der Ansprüche 1 bis 3, wobei das Trägerelement (6) eine Bodenwand (6c) und eine am freien Ende der Bodenwand (6c) angeordnete und in etwa senkrecht zur Bodenwand (6c) ausgerichtete Abschlusswand (6d) aufweist.

5. Vorrichtung nach Anspruch 4, wobei am oberen Ende der Abschlusswand (6d) ein in etwa parallel zur Bodenwand (6c) verlaufender, gegen die Befestigungseinrichtung (5) weisender Niederhalter (6e) angeordnet ist.

6. Vorrichtung nach Anspruch 4 oder 5, wobei an dem der Abschlusswand (6d) gegenüber liegenden Ende der Bodenwand (6c) ein Gelenk (6g) angeordnet ist, mit dem das Trägerelement (6) mit dem Zwischenstück (9) drehbar verbunden ist.

7. Vorrichtung nach Anspruch 3 oder 6, wobei die Drehachse des Gelenks (6g) horizontal oder vertikal verläuft.

8. Vorrichtung nach einem der Ansprüche 1 bis 7, wobei die lösbare Kupplung (10a, 10b) eine Aufnahmebuchse (10a) zum Aufnehmen eines Steckelements (10b) umfasst.

9. Vorrichtung nach Anspruch 8, wobei die Aufnahmebuchse (10a) der Befestigungseinrichtung (5) und das Steckelement (10b) dem Zwischenstück (9) zugeordnet sind.

10. Vorrichtung nach einem der Ansprüche 1 bis 9, wobei die lösbare Kupplung (10a, 10b) eine manuell lösbare Verriegelung (11) umfasst.

11. Vorrichtung nach einem der Ansprüche 1 bis 10, wobei die Befestigungseinrichtung (5) zwischen der Oberseite (2c) der Rückenlehne (2) und der Unterseite (3c) der Kopfstütze (3) angeordnet ist.

12. Vorrichtung nach Anspruch 11, soweit auf Anspruch 8 rückbezogen, wobei die Befestigungseinrichtung (5) Befestigungselemente (5c, 5d) umfasst, mit denen die Aufnahmebuchse (10a) in etwa mittig zwischen den beiden Kopfstützenstangen (4a, 4b) der Kopfstützenhalterung (4) befestigt werden kann.

13. Vorrichtung nach Anspruch 11 oder 12, wobei das Trägerelement (6) in der Nichtgebrauchsstellung im Wesentlichen innerhalb der Aussenkonturen der Unterseite (3c) der Kopfstütze (3) und der Oberseite (2c) der Rückenlehne (2) liegt, während es in der Gebrauchsstellung die Vorderseite (2a), bzw. die Hinterseite (2b) der Rückenlehne (2) soweit überragt, dass Gegenstände (12, 12a) am Trägerelement (6) aufgehängt werden können.

14. Vorrichtung nach einem der Ansprüche 11 bis 13, soweit auf Anspruch 8 rückbezogen, wobei die Aufnahmebuchse (10a) zwei gegenüberliegende Öffnungen (10e, 10f) aufweist, so dass das Steckelement (10b) von der Vorderseite (2a) oder von der Hinterseite (2b) der Rückenlehne (2) eingesteckt werden kann.

15. Vorrichtung nach einem der Ansprüche 1 bis 14, wobei das Trägerelement (6) durch eine Feder in die Nichtgebrauchsstellung bewegt wird.

## Claims

1. Device for suspending objects on a vehicle seat part, such as a seat back (2), head rest (3), or a head rest holding element (4a, 4b) of a vehicle (1), comprising:
a securing device (5), which is allocated to the vehicle seat part (2, 3, 4a, 4b), an intermediate piece (9) connected to the securing device (5) by means of a detachable coupling (10a, 10b), and
a carrier element (6), connected to the intermediate piece (9), **characterized in that** the intermediate part (9) exhibits a protective housing (8), and that the carrier element (6) is movably connected to the intermediate part (9), and the carrier element can be moved between the position of non-use, in which it is accommodated at least partly in the protective housing (8), and/or is in contact with this, and a position of use, in which it is accessible for the suspension of objects (12, 12a).

2. Device according to claim 1, wherein the carrier element (6) is connected to the intermediate piece (9) in a linear movable fashion.

3. Device according to claim 1, wherein the carrier element (6) is rotatably connected to the intermediate piece (9) by means of a joint (6g).

4. Device according to one of claims 1 to 3, wherein the carrier element (6) exhibits a base wall (6c) and a closure wall (6d) arranged at the free end of the base wall (6c) and is aligned approximately perpendicular to the base wall (6c).

5. Device according to claim 4, wherein a hold-down element (6e) is arranged at the upper end of the closure wall (6d), running approximately parallel to the base wall (6c), pointing against the securing device (5).

6. Device according to claim 4 or 5, wherein a joint (6g) is arranged at the end of the base wall (6c) lying opposite the closure wall (6d), with which the carrier element (6) is rotatably connected to the intermediate piece (9).

7. Device according to claim 3 or 6, wherein the axis of rotation of the joint (6g) runs horizontally or vertically.

8. Device according to one of claims 1 to 7, wherein the detachable coupling (10a, 10b) comprises an accommodation sleeve (10a) for accommodating a plug-in element (10b).

9. Device according to claim 8, wherein the accommodation sleeve (10a) is allocated to the securing device (5) and the plug-in element (10b) is allocated to intermediate piece (9).

10. Device according to one of claims 1 to 9, wherein the detachable coupling (10a, 10b) comprises a manually detachable locking device (11).

11. Device according to one of claims 1 to 10, wherein the securing device (5) is arranged between the upper side (2c) of the seat back (2) and the underside (3c) of the head rest (3).

12. Device according to claim 11, inasmuch as this reverts to claim 8, wherein the securing device (5) comprises securing elements (5c, 5d) with which the accommodation sleeve (10a) can be secured in an approximately middle position between the two head support rods (4a, 4b) of the head support holding element (4).

13. Device according to claim 11 or 12, wherein the carrier element (6) in the position of non-use lies essentially inside the outer contours of the under side (3c) of the head rest (3) and the upper side (2c) of the seat back (2), while in the position of use it projects beyond the front side (2a) or rear side (2b) respectively of the seat back (2) sufficiently far for it to be possible for objects (12, 12a) to be suspended on the carrier element (6).

14. Device according to one of claims 11 to 13, inasmuch as this reverts to claim 8, wherein the accommodation sleeve (10a) exhibits two mutually opposed apertures (10e, 10f), such that the plug-in element (10b) can be plugged in from the front side (2a) or from the rear side (2b) of the seat back (2).

15. Device according to one of claims 1 to 14, wherein the carrier element (6) is moved by a spring into the position of non-use.

## Revendications

1. Dispositif pour accrocher des objets au niveau d'une partie de siège de véhicule, comme un dossier (2), des appuis-tête (3) ou une fixation d'appui-tête (4a, 4b) d'un siège de véhicule (1), comprenant
un dispositif de fixation (5), qui est associé à la partie de siège de véhicule (2, 3, 4a, 4b),
un élément intermédiaire (9) relié au dispositif de fixation (5) par l'intermédiaire d'un couplage (10a, 10b) amovible, ainsi que
un élément porteur (6) relié à l'élément intermédiaire (9), **caractérisé en ce que** l'élément intermédiaire (9) présente un boîtier de protection (8) et l'élément porteur (6) est relié mobile à l'élément intermédiaire (9) et l'élément porteur (6) peut être déplacé entre une position de non-utilisation, dans laquelle il est logé au moins partiellement dans le boîtier de protection (8) et/ou s'ajuste à celui-ci, et une position d'utilisation, dans laquelle il est accessible pour accrocher des objets (12, 12a).

2. Dispositif selon la revendication 1, dans lequel l'élément porteur (6) est relié mobile de manière linéaire à l'élément intermédiaire (9).

3. Dispositif selon la revendication 1, dans lequel l'élément porteur (6) est relié rotatif à l'élément intermédiaire (9) par l'intermédiaire d'une articulation (6g).

4. Dispositif selon l'une quelconque des revendications 1 à 3, dans lequel l'élément porteur (6) présente une paroi de fond (6c) et une paroi de fermeture (6d) agencée au niveau d'une extrémité libre de la paroi de fond (6c) et orientée à peu près perpendiculairement à la paroi de fond (6c).

5. Dispositif selon la revendication 4, dans lequel un organe de retenue (6e) à peu près parallèle à la paroi de fond (6c), tourné vers le dispositif de fixation (5), est agencé au niveau d'une extrémité supérieure de la paroi de fermeture (6d).

6. Dispositif selon la revendication 4 ou 5, dans lequel une articulation (6g), avec laquelle l'élément porteur (6) est relié rotatif à l'élément intermédiaire (9), est agencée au niveau de l'extrémité de la paroi de fond (6c) qui fait face à la paroi de fermeture (6d).

7. Dispositif selon la revendication 3 ou 6, dans lequel l'axe de rotation de l'articulation (6g) est horizontal ou vertical.

8. Dispositif selon l'une quelconque des revendications 1 à 7, dans lequel le couplage (10a, 10b) amovible comprend une douille de réception (10a) destinée à recevoir un élément enfichable (10b).

9. Dispositif selon la revendication 8, dans lequel la douille de réception (10a) du dispositif de fixation (5) et l'élément enfichable (10b) sont associés à l'élément intermédiaire (9).

10. Dispositif selon l'une quelconque des revendications 1 à 9, dans lequel le couplage (10a, 10b) amovible comprend un mécanisme de verrouillage (11) pouvant être débloqué de manière manuelle.

11. Dispositif selon l'une quelconque des revendications 1 à 10, dans lequel le dispositif de fixation (5) est agencé entre le côté supérieur (2c) du dossier (2) et le côté inférieur (3c) de l'appui-tête (3).

12. Dispositif selon la revendication 11, dans la mesure où il est tenu compte de la revendication 8, dans lequel le dispositif de fixation (5) comprend des éléments de fixation (5c, 5d), avec lesquels la douille de réception (10a) peut être fixée à peu près au milieu entre les deux barres d'appui-tête (4a, 4b) de la fixation d'appui-tête (4).

13. Dispositif selon la revendication 11 ou 12, dans lequel l'élément porteur (6), dans la position de non-utilisation, se situe essentiellement à l'intérieur des contours extérieurs du côté inférieur (3c) de l'appui-tête (3) et du côté supérieur (2c) du dossier (2), tandis qu'il dépasse, dans la position d'utilisation, le côté avant (2a), ou bien le côté arrière (2b) du dossier (2) de telle manière que des objets (12, 12a) peuvent être accrochés à l'élément porteur (6).

14. Dispositif selon l'une quelconque des revendications 11 à 13, dans la mesuré où il est tenu compte de la revendication 8, dans lequel la douille de réception (10a) présente deux ouvertures (10e, 10f) se faisant face, de sorte que l'élément enfichable (10b) peut être enfiché depuis le côté avant (2a) ou depuis le côté arrière (2b) du dossier (2).

15. Dispositif selon l'une quelconque des revendications 1 à 14, dans lequel l'élément porteur (6) peut être placé dans la position de non-utilisation grâce à un ressort.
